# EUROPÄISCHE PATENTSCHRIFT

(11) **EP 2 851 273 B1**
(45) Veröffentlichungstag und Bekanntmachung des Hinweises auf die Patenterteilung: **10.05.2017**
(21) Anmeldenummer: 14175352.5
(22) Anmeldetag: 02.07.2014
(51) Int. Cl.: B62D 33/06, B60J 1/00

(54) **Fahrzeugkabine für ein Nutzfahrzeug, sowie Verfahren zur Herstellung einer Fahrzeugkabine für ein Nutzfahrzeug**
Cabin for a utility vehicle and method of fabricating a cabin for a utility vehicle
Cabine pour véhicule utilitaire et procédé de fabrication d'une cabine pour véhicule utilitaire

(30) Priorität: 19.09.2013 DE 102013110313
(43) Veröffentlichungstag der Anmeldung: 25.03.2015
(73) Patentinhaber: CLAAS Tractor SAS, 78141 Velizy (FR)
(72) Erfinder: Jeannot, Alexandre, 93700 Drancy (FR)
(74) Vertreter: Budach, Steffen

(56) Entgegenhaltungen:
- EP-A1- 2 277 765
- EP-A2- 1 764 243
- FR-A1- 2 879 511
- GB-A- 2 469 649
- US-A1- 2011 033 667

## Beschreibung

Die Erfindung betrifft eine Fahrzeugkabine für ein Nutzfahrzeug, insbesondere für ein landwirtschaftliches Nutzfahrzeug wie einen Traktor, wobei ein Kabineninnenraum unter anderem durch eine Windschutzscheibe und durch ein Kabinendach begrenzt ist, welches einen transparenten Dachteil umfasst. Des Weiteren betrifft die Erfindung ein Verfahren zur Herstellung einer vorgenannten Fahrzeugkabine.

Landwirtschaftliche Nutzfahrzeuge wie beispielsweise Traktoren sind üblicherweise mit Fahrzeugkabinen ausgestattet, welche die Sicherheit und den Fahrkomfort des Fahrers verbessern und ihn vor äußeren Einflüssen, wie beispielsweise der Witterung, Staub bei seinen Arbeitstätigkeiten, etc., schützen. Zur Ermöglichung einer guten Rundumsicht sind Fahrzeugkabinen dabei, abgesehen von einer frontseitigen Windschutzscheibe, auch im heckseitigen Bereich, sowie an den Seiten mit entsprechenden Scheiben ausgestattet. Zudem sind Fahrzeugkabinen bei Nutzfahrzeugen bekannt, bei welchen bei einem geschlossen ausgeführten Kabinendach mittels eines sogenannten Panoramadachs eine Möglichkeit für Lichteinfall vorgesehen ist.

Aus der EP 1 288 044 B1 geht eine Fahrzeugkabine für ein Nutzfahrzeug hervor, bei welcher ein Kabineninnenraum durch eine Windschutzscheibe, sowie weitere Scheiben begrenzt und nach oben durch ein Kabinendach abgeschlossen ist. Das Kabinendach ist dabei im, in Fahrtrichtung gesehen, vorderen Bereich mit einer Dachluke ausgestattet, welche neben einer Abdeckung auch einen transparenten Dachteil in Form eines Fensterelements aufweist.

Ausgehend vom vorstehend beschriebenen Stand der Technik ist es nun die Aufgabe der vorliegenden Erfindung, eine Fahrzeugkabine für ein Nutzfahrzeug zu schaffen, bei welcher eine möglichst geringe Sichtbeeinträchtigung durch ein Kabinendach in einem an die Windschutzscheibe angrenzenden Bereich erzeugt wird.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Verfahren zur Herstellung einer Fahrzeugkabine geht des Weiteren aus den Ansprüchen 8 bis 10 hervor.

Gemäß der Erfindung ist ein Kabineninnenraum einer Fahrzeugkabine unter anderem durch eine Windschutzscheibe und durch ein Kabinendach begrenzt. Das Kabinendach umfasst dabei einen transparenten Dachteil, wobei es sich bei diesem transparenten Dachteil im Sinne der Erfindung bevorzugt um eine Glasscheibe handelt. Abgesehen von Glas kann der transparente Dachteil aber auch aus einem sonstigen transparenten Material hergestellt sein, beispielsweise aus einem durchsichtigen Kunststoff. Die erfindungsgemäße Fahrzeugkabine ist dabei insbesondere für ein landwirtschaftliches Nutzfahrzeug gedacht, wie beispielsweise einen Traktor.

Die Erfindung umfasst nun die technische Lehre, dass der transparente Dachteil und die Windschutzscheibe unmittelbar aneinander angrenzen. Mit anderen Worten ist also der transparente Dachteil im Kabinendach derartig angeordnet, dass er direkt benachbart zu der Windschutzscheibe positioniert ist, so dass durch die Windschutzscheibe und den transparenten Dachteil ein Teil der Kabine gebildet wird, der insgesamt eine ungehinderte Sicht zulässt..

Eine derartige Gestaltung einer Fahrzeugkabine hat dabei den Vorteil, dass ein Sichtfeld des Fahrers dieses Nutzfahrzeuges dadurch ohne Unterbrechung bis weit in den Bereich des Kabinendachs hinein erweitert ist. Hierdurch können auch Arbeitstätigkeiten mit dem Nutzfahrzeug, welche in einer oberhalb der Kabine liegenden Ebene stattfinden oder sich auf diesen Bereich auswirken, direkt von der Position des Fahrers aus überwacht werden. Hierdurch wird beispielsweise bei einem Traktor das Arbeiten und Rangieren mit einem Frontlader im oberen Hubbereich deutlich vereinfacht. Da der Fahrer auch eine gute Sicht auf den oberhalb des Kabinendachs liegenden Bereich hat, kann das Unfallrisiko gerade beim Arbeiten mit einem Frontlader erheblich reduziert werden.

Im Rahmen der Erfindung ist unter dem "unmittelbar einander Angrenzen" von Windschutzscheibe und transparentem Dachteil zu verstehen, dass keine anderweitigen Teile der Fahrzeugkabine, insbesondere Teile des Kabinendaches, wie z.B. Rahmenteile oder Streben zwischen der Windschutzscheibe und dem transparentem Dachteil platziert sind. Davon nicht betroffen sind Mittel, welche die beiden Komponenten bloß aneinander befestigen, wie beispielsweise eine entsprechende Klebstoffschicht bzw. eine Dichtung zwischen Windschutzscheibe und transparentem Dachteil, da hierdurch eventuell nur eine zu vernachlässigende Unterbrechung des Sichtbereichs für den Fahrzeugführer stattfindet.
Erfindungsgemäß liegen die Windschutzscheibe und der transparente Dachteil bevorzugt als Komponenten vor, welche zur Herstellung der Fahrzeugkabine unmittelbar aneinander angrenzend befestigt werden. Um dabei den in diesem Bereich während des Betriebs des Nutzfahrzeuges auftretenden Belastungen zuverlässig standhalten zu können und bestimmten Sicherheitskriterien gerecht zu werden, sowie einen Eintritt von Feuchtigkeit zu verhindern, sind die Windschutzscheibe und der transparente Dachteil dabei dann bevorzugt auch aneinander befestigt. Sofern es fertigungstechnisch realisierbar ist, kann prinzipiell aber auch eine einstückige Ausführung der Windschutzscheibe und des transparenten Dachteils vorgesehen werden.

Entsprechend der Erfindung sind die Windschutzscheibe und der transparente Dachteil über eine zwischenliegende Dichtung aneinander befestigt. Hierdurch kann eine Verbindung zwischen der Windschutzscheibe und dem transparenten Dachteil realisiert werden, welche einerseits hohen Belastungen standhalten und damit sicherheitsrelevanten Vorgaben gerecht werden kann, zum anderen aber auch zuverlässig ein Eintreten von Flüssigkeit in den Innenraum der Fahrzeugkabine verhindert. In Weiterbildung dieser Ausführungsform ist die Dichtung transparent ausgeführt, so dass trotz der Anordnung der Dichtung keine Sichtbeeinträchtigung entsteht.
Gemäß einer weiteren Ausgestaltung der Erfindung sind die Windschutzscheibe und der transparente Dachteil entlang einer Nut aneinander befestigt, welche der Windschutzscheibe zugewandt in einem Endbereich des transparenten Dachteils ausgestaltet und in die die Windschutzscheibe mit einer Stoßfläche eingeführt ist. Hierdurch können Formtoleranzen, sowie Konturtoleranzen der Windschutzscheibe ausgeglichen werden. Dementsprechend kann bei der Windschutzscheibe problemlos auf eine standardmäßig ausgeführte Windschutzscheibe zurückgegriffen werden. Des Weiteren wird eine Befestigung von Windschutzscheibe und transparentem Dachteil aneinander vereinfacht, indem eine entsprechende Klebstoffschicht oder eine Dichtung in die Nut des transparenten Dachteils eingebracht und anschließend die Windschutzscheibe mit ihrer Stoßfläche eingeführt wird.

In Weiterbildung der vorgenannten Ausgestaltung liegt eine Nuttiefe über der halben Dicke des transparenten Dachteils. Durch diese entsprechend tief ausgestaltete Nut wird ein zwischen Windschutzscheibe und transparentem Dachteil definierter Bereich für eine Dichtung oder für Klebstoff vergrößert, so dass problemlos eine entsprechend große Menge an Klebstoff und/oder Dichtmasse zwischen beiden Komponenten vorgesehen werden kann.

Alternativ ist es im Rahmen der Erfindung jedoch auch denkbar, die Windschutzscheibe und den transparenten Dachteil mit Stoßflächen unter einem Winkel zusammenzuführen und in den sich hierbei ausbildenden Spalt zwischen den Stoßflächen Klebstoff bzw. eine Dichtung einzubringen. In der Folge kann eine Nut seitens des transparenten Dachteils entfallen, allerdings sind höhere Anforderungen an Kontur- und Formtoleranzen der beiden Elemente zu setzen. Auch ein Montageprozess gestaltet sich aufwändiger.

Gemäß einer weiteren Ausführungsform der Erfindung sollen die Windschutzscheibe und der transparente Dachteil zudem jeweils mit einem Kabinenrahmen verklebt sein. Insbesondere findet eine Herstellung der Fahrzeugkabine dabei dahingehend statt, dass zunächst die Windschutzscheibe mit dem Kabinenrahmen verklebt wird, indem die Windschutzscheibe mit einer Stoßfläche zuerst zum Kabinenrahmen ausgerichtet und anschließend an den Kabinenrahmen angedrückt wird. Besonders bevorzugt sind dabei seitens des Kabinenrahmens entsprechende Anschläge für die Windschutzscheibe definiert, welche die Positionierung der Windschutzscheibe erleichtern. Im Folgenden wird dann der transparente Dachteil zunächst seitens der Windschutzscheibe aufgesetzt und im Anschluss daran an den Kabinenrahmen angedrückt und mit diesem verklebt. Dabei ist im Vorfeld vor dem jeweiligen Andrücken jeweils eine entsprechende Klebstoffschicht auf den Kabinenrahmen oder auf die mit diesem zu verklebende Komponente aufgebracht worden.

In Weiterbildung der Erfindung liegen die Windschutzscheibe und/oder der Dachteil seitens des Kabinenrahmens auf Abstandselementen auf. Im Rahmen eines erfindungsgemäßen Verfahrens zur Herstellung einer Fahrzeugkabine sind diese Abstandselemente dabei vor Befestigung der Windschutzscheibe seitens des Kabinenrahmens befestigt, bevorzugt aufgeklebt, worden und definieren im Folgenden jeweils eine Mindestdicke einer Klebstoffschicht zwischen der Windschutzscheibe und dem Kabinenrahmen bzw. dem transparenten Dachteil und dem Kabinenrahmen. Dies hat den Vorteil, dass über die Abstandselemente in den Bereichen, in denen die Windschutzscheibe bzw. der transparente Dachteil am Kabinenrahmen verklebt werden, eine ausreichende minimale Klebstoffdicke definiert wird, wodurch eine sichere Verbindung zwischen dem Kabinenrahmen und der Windschutzscheibe bzw. dem transparenten Dachteil gewährleistet wird.

Die Erfindung ist nicht auf die angegebene Kombination der Merkmale der nebengeordneten Ansprüche oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine perspektivische Ansicht einer Fahrzeugkabine entsprechend einer bevorzugten Ausführungsform der Erfindung;
- Fig. 2: eine Schnittansicht der Fahrzeugkabine aus Fig. 1 im Bereich einer Windschutzscheibe;
- Fig. 3: eine perspektivische Detailansicht der Fahrzeugkabine aus Fig. 1;
- Fig. 4: eine Schnittansicht einer Fahrzeugkabine entsprechend einer alternativen Ausführungsform der Erfindung, geschnitten im Bereich einer Windschutzscheibe; und
- Fig. 5: eine Schnittansicht einer Fahrzeugkabine entsprechend einer weiteren, alternativen Ausgestaltung der Erfindung, geschnitten im Bereich einer Windschutzscheibe.

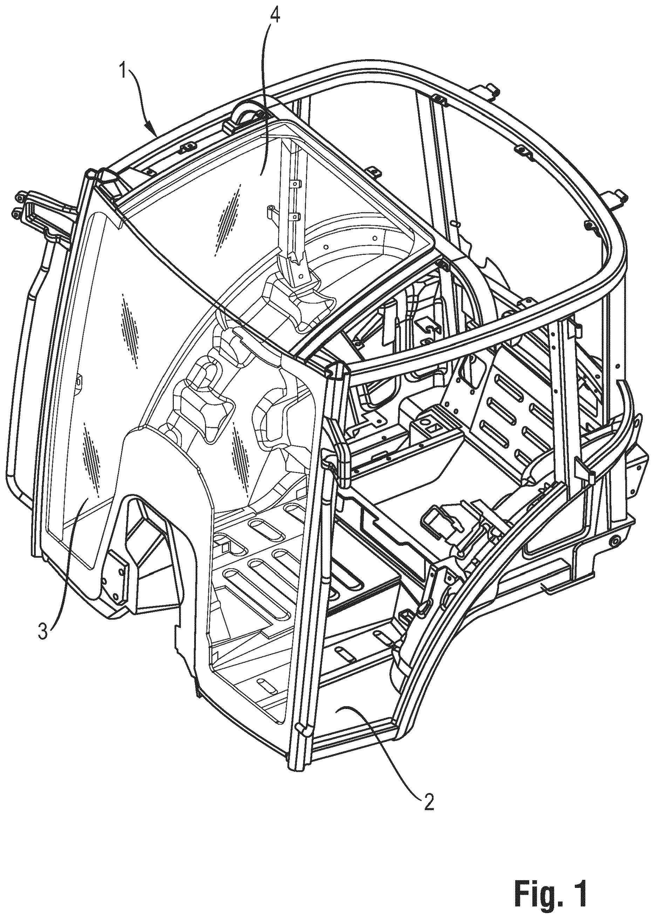

Aus Fig. 1 geht eine perspektivische Ansicht einer Fahrzeugkabine entsprechend einer bevorzugten Ausführungsform der Erfindung hervor, wobei diese Fahrzeugkabine dabei für ein landwirtschaftliches Nutzfahrzeug in Form eines Traktors gedacht ist. Wie in Fig. 1 zu erkennen ist, umfasst die Fahrzeugkabine einen Kabinenrahmen 1, welcher auf einer Bodengruppe 2 aufgebaut und aus mehreren Einzelstreben zusammengesetzt ist. Dabei dient der Kabinenrahmen 1 der Aufnahme - vorliegend nicht weiter dargestellter - Fahrzeugtüren, eines Kabinendachs, sowie mehrerer Scheiben, wobei von letzteren lediglich eine frontseitige Windschutzscheibe 3 gezeigt ist, die eine nicht näher dargestellte Haube des Traktors umschließen kann und bis zur Bodengruppe 2 reicht. Von dem - vorliegend ebenfalls ansonsten nicht dargestellten - Kabinendach ist in Fig. 1 zudem nur ein transparenter Dachteil 4 zu sehen, während sonstige Komponenten des Kabinendachs, ähnlich wie die sonstigen Scheiben und Fahrzeugtüren, aus Gründen der besseren Übersichtlichkeit nicht weiter dargestellt sind.

Als Besonderheit der erfindungsgemäßen Fahrzeugkabine grenzen die Windschutzscheibe 3 und der transparente Dachteil 4 unmittelbar aneinander, so dass im verbauten Zustand der Fahrzeugkabine der Sichtbereich eines Fahrzeugführers nahezu ohne Unterbrechung von der Windschutzscheibe 3 in den Bereich des Dachteils 4 führt. In der Folge kann der Fahrzeugführer Arbeitstätigkeiten in einer oberhalb der Fahrzeugkabine liegenden Ebene, beispielsweise Arbeiten mit einem Frontlader eines Traktors, problemlos permanent überwachen.

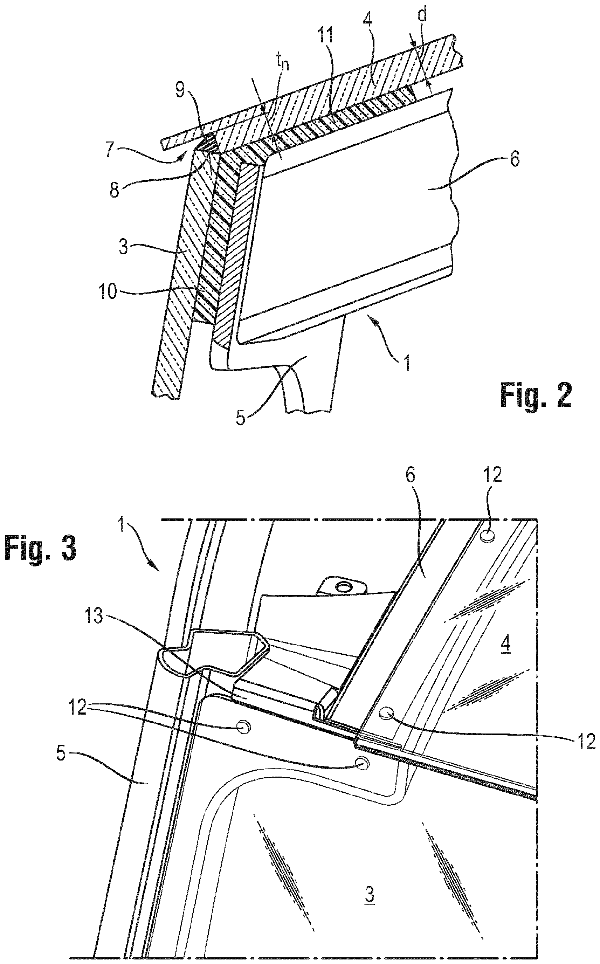

Unter Zuhilfenahme der Schnittansicht in Fig. 2 soll nun die Befestigung der Windschutzscheibe 3 und des transparenten Dachteils 4 am Kabinenrahmen 1, sowie untereinander näher beschrieben werden. Dabei ist in Fig. 2 die Fahrzeugkabine im Bereich einer Strebe 5, sowie einer Dachstrebe 6 des Kabinenrahmens 1, quer zur Windschutzscheibe 3 und dem transparenten Dachteil 4 geschnitten. Wie in Fig. 2 zu erkennen ist, verfügt der transparente Dachteil 4 dabei an einem Ende über eine Nut 7, welche den transparenten Dachteil 4 quer durchläuft und in die die Windschutzscheibe 3 mit einer Stoßfläche 8 eingeführt ist. Zur Befestigung der Windschutzscheibe 3 und des transparenten Dachteils 4 aneinander ist dann in diese Nut 7, stirnseitig der Stoßfläche 8 eine Dichtung 9 eingefügt, welche die Windschutzscheibe 3 und den transparenten Dachteil 4 aneinander befestigt und transparent ausgeführt ist. Die Windschutzscheibe 3 ist zudem an der Strebe 5 über eine Klebstoffschicht 10 und der transparente Dachteil 4 an der Dachstrebe 6 über eine Klebstoffschicht 11 befestigt.

Um zudem die Dichtung 9 mit einer ausreichenden Größe zwischen Windschutzscheibe 3 und transparentem Dachteil 4 realisieren zu können, ist die Nut 7 mit einer Nuttiefe tₙ ausgeführt, welche größer ist als die halbe Dicke d des transparenten Dachteils 4. In der Folge wird durch die Nut 7 und die Stoßfläche 8 der Windschutzscheibe 3 ein ausreichend großer Zwischenraum zur Unterbringung der Dichtung 9 definiert.

Eine Herstellung der erfindungsgemäßen Fahrzeugkabine aus Fig. 1 soll nun unter Zuhilfenahme der weiteren Fig. 3 näher beschrieben werden: Zunächst werden an der Strebe 5, an der Dachstrebe 6, sowie den weiteren Streben des Kabinenrahmens 1, auf welchem die Windschutzscheibe 3 und der transparente Dachteil 4 aufliegen, Abstandselemente 12 aufgeklebt, die Mindestdicken der jeweiligen Klebstoffschichten 10 bzw. 11 definieren. Im Folgenden werden dann zunächst die Klebstoffschichten 10 für die Windschutzscheibe 3 auf den Kabinenrahmen 1 aufgetragen und im Folgenden die Windschutzscheibe 3 mit ihrer Stoßfläche 8 hinsichtlich des Kabinenrahmens 1 ausgerichtet. Diese Ausrichtung erfolgt dabei anhand von mehreren Anschlägen des Kabinenrahmens 1, von welchen in der perspektivischen Ansicht in Fig. 3 nur ein Anschlag 13 zu sehen ist. Nach erfolgter Ausrichtung wird die Windschutzscheibe 3 dann an den Kabinenrahmen 1 angedrückt und im Folgenden über die zwischenliegenden Klebstoffschichten 10 am Kabinenrahmen 1 verklebt.

Als Nächstes wird dann der transparente Dachteil 4 seitens der Windschutzscheibe 3 derartig aufgesetzt, dass die Windschutzscheibe 3 mit ihrer Stoßfläche 8 in die Nut 7 des Dachteils 4 einragt, wobei im Vorfeld die Dichtung 9 zwischen beiden Komponenten eingebracht wurde. Ebenfalls im Vorfeld wurden entsprechende Klebstoffschichten 11 auf die Dachstreben 6 aufgetragen, wobei der transparente Dachteil 4 im Folgenden dann nach Positionierung zu der Windschutzscheibe 3 an den Kabinenrahmen 1 im Bereich der Dachstreben 6 angedrückt und mittels der zwischenliegenden Klebstoffschichten 11 mit diesem verklebt wird. Die Abstandselemente 12 sorgen dabei jeweils für die Definition von Mindestdicken der Klebstoffschichten 10 und 11.

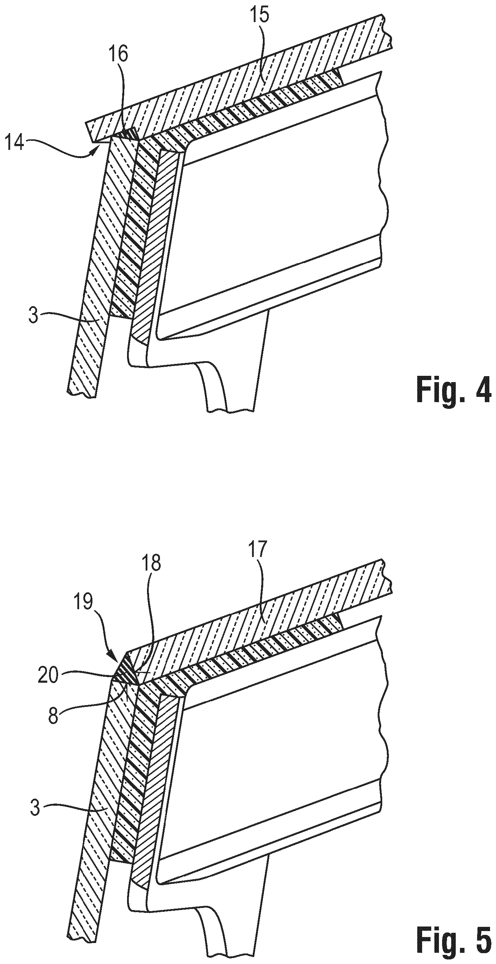

Des Weiteren geht aus Fig. 4 eine Schnittansicht einer Fahrzeugkabine entsprechend einer alternativen Ausführungsform hervor. Diese entspricht dabei weitestgehend der Variante nach den Fig. 1 bis 3, wobei als einziger Unterschied eine Nut 14 eines transparenten Dachteils 15 im Vergleich zu der vorhergehenden Variante mit einer niedrigeren Tiefe ausgeführt ist, so dass zwischen einer Windschutzscheibe 3 und dem transparenten Dachteil 15 nur eine Dichtung 16 mit geringerem Querschnitt vorgesehen werden kann. Im Übrigen entspricht die alternative Ausgestaltung sonst der vorhergehenden Variante, so dass auf das hierzu Beschriebene Bezug genommen wird.

Schließlich geht noch aus Fig. 5 eine weitere, alternative Ausführungsform einer erfindungsgemäßen Fahrzeugkabine hervor, welche sich von den vorhergehend beschriebenen Varianten der Fig. 1 bis 4 dadurch unterscheidet, dass eine Windschutzscheibe 3 und ein transparenter Dachteil 17 mit Stoßflächen 8 und 18 unter einem Winkel zueinander geführt sind und dabei einen Zwischenraum 19 für die Aufnahme einer Dichtung 20 definieren. In der Folge sind zur Ausgestaltung einer Fahrzeugkabine gemäß Fig. 5 höhere Toleranzen einzuhalten, als dies bei den vorhergehenden Varianten der Fall ist. Im Übrigen entspricht auch die Variante nach Fig. 5 den vorhergehend beschriebenen Ausführungsformen.

Mittels der erfindungsgemäßen Ausgestaltungen einer Fahrzeugkabine für ein insbesondere landwirtschaftliches Nutzfahrzeug können Sichtbeeinträchtigungen, welche herkömmlicherweise durch ein Kabinendach in einem an eine Windschutzscheibe angrenzenden Bereich bestehen, deutlich reduziert werden.

### Bezugszeichenliste

- 1: Kabinenrahmen
- 2: Bodengruppe
- 3: Windschutzscheibe
- 4: transparenter Dachteil
- 5: Strebe
- 6: Dachstrebe
- 7: Nut
- 8: Stoßfläche
- 9: Dichtung
- 10: Klebstoffschicht
- 11: Klebstoffschicht
- 12: Abstandselemente
- 13: Anschlag
- 14: Nut
- 15: transparenter Dachteil
- 16: Dichtung
- 17: transparenter Dachteil
- 18: Stoßfläche
- 19: Zwischenraum
- 20: Dichtung

- d: Dicke
- tₙ: Nuttiefe

## Patentansprüche

1. Fahrzeugkabine für ein Nutzfahrzeug, insbesondere für ein landwirtschaftliches Nutzfahrzeug wie einen Traktor, wobei ein Kabineninnenraum unter anderem durch eine Windschutzscheibe (3) und durch ein Kabinendach begrenzt ist, welches einen transparenten Dachteil (4; 15; 17) umfasst, **dadurch gekennzeichnet, dass**
der transparente Dachteil (4; 15; 17) und die Windschutzscheibe (3) unmittelbar aneinander angrenzen, wobei die Windschutzscheibe (3) und der transparente Dachteil (4; 15; 17) über eine zwischenliegende Dichtung (9; 16; 20) aneinander befestigt sind.

2. Fahrzeugkabine nach Anspruch 1, **dadurch gekennzeichnet, dass** die Dichtung (9; 16; 20) transparent ausgeführt ist.

3. Fahrzeugkabine nach Anspruch 1, **dadurch gekennzeichnet, dass** die Windschutzscheibe (3) und der transparente Dachteil (4; 15) entlang einer Nut (7; 14) aneinander befestigt sind, welche, der Windschutzscheibe (3) zugewandt, in einem Endbereich des transparenten Dachteils (4; 15) ausgestaltet und in die die Windschutzscheibe (3) mit einer Stoßfläche (8) eingeführt ist.

4. Fahrzeugkabine nach Anspruch 3, **dadurch gekennzeichnet, dass** eine Nuttiefe (tₙ) über der halben Dicke (d) des transparenten Dachteils (4) liegt.

5. Fahrzeugkabine nach Anspruch 1, **dadurch gekennzeichnet, dass** die Windschutzscheibe (3) und der transparente Dachteil (4; 15; 17) zudem jeweils mit einem Kabinenrahmen (1) verklebt sind.

6. Fahrzeugkabine nach Anspruch 5, **dadurch gekennzeichnet, dass** die Windschutzscheibe (3) und/oder der Dachteil (4; 15; 17) seitens des Kabinenrahmens (1) auf Abstandselementen (12) aufliegen.

7. Verfahren zur Herstellung einer Fahrzeugkabine für ein Nutzfahrzeug, wobei eine Windschutzscheibe (3) und ein transparenter Dachteil (4; 15; 17) unmittelbar aneinander angrenzend an einem Kabinenrahmen (1) befestigt werden.

8. Verfahren nach Anspruch 7, **dadurch gekennzeichnet, dass** 5 zunächst die Windschutzscheibe (3) mit dem Kabinenrahmen (1) verklebt wird, indem die Windschutzscheibe (3) mit einer Stoßfläche (8) zuerst zum Kabinenrahmen (1) ausgerichtet und anschließend an den Kabinenrahmen (1) angedrückt wird, wobei im Folgenden der transparente Dachteil (4; 15; 17) zunächst seitens der Windschutzscheibe (3) aufgesetzt und im Anschluss daran an den Kabinenrahmen (1) angedrückt und mit diesem verklebt wird.

9. Verfahren nach Anspruch 8, **dadurch gekennzeichnet, dass** vor Befestigung der Windschutzscheibe (3) seitens des Kabinenrahmens (1) mehrere Abstandselemente (12) befestigt werden, welche jeweils eine Mindestdicke einer Klebstoffschicht zwischen Windschutzscheibe (3) und Kabinenrahmen (1) und/oder zwischen transparentem Dachteil (4; 15; 17) und Kabinenrahmen (1) definieren.

## Claims

1. A vehicle cab for a utility vehicle, in particular for an agricultural utility vehicle like a tractor, wherein a cab interior is defined inter alia by a windscreen (3) and by a cab roof which includes a transparent roof portion (4; 15; 17), **characterised in that** the transparent roof portion (4; 15; 17) and the windscreen (3) directly adjoin each other, wherein the windscreen (3) and the transparent roof portion (4; 15; 17) are fixed together by way of an interposed seal (9; 16; 20).

2. A vehicle cab according to claim 1 **characterised in that** the seal (9; 16; 20) is transparent.

3. A vehicle cab according to claim 1 **characterised in that** the windscreen (3) and the transparent roof portion (4; 15) are fixed to each other along a groove (7; 14) which, towards the windscreen (3), is provided in an end region of the transparent roof portion (4; 15) and into which the windscreen (3) is introduced with a butting surface (8).

4. A vehicle cab according to claim 3 **characterised in that** a groove depth (tₙ) is over half the thickness (d) of the transparent roof portion (4).

5. A vehicle cab according to claim 1 **characterised in that** the windscreen (3) and the transparent roof portion (4; 15; 17) are also each glued to a cab frame (1).

6. A vehicle cab according to claim 5 **characterised in that** the windscreen (3) and/or the transparent roof portion (4; 15; 17) lie on the part of the cab frame (1) on spacer elements (12).

7. A method of manufacturing a vehicle cab for a utility vehicle, wherein a windscreen (3) and a transparent roof portion (4; 15; 17) are fixed in directly mutually adjoining relationship to a cab frame (1).

8. A method according to claim 7 **characterised in that** firstly the windscreen (3) is glued to the cab frame (1) by the windscreen (3) firstly being aligned with a butting surface (8) relative to the cab frame (1) and then pressed against the cab frame (1), wherein subsequently the transparent roof portion (4; 15; 17) is firstly fitted on the part of the windscreen (3) and then pressed against the cab frame (1) and glued thereto.

9. A method according to claim 8 **characterised in that** prior to fixing of the windscreen (3) on the part of the cab frame (1) a plurality of spacer elements (12) are fixed, which respectively define the minimum thickness of an adhesive layer between the windscreen (3) and the cab frame (1) and/or between the transparent roof portion (4; 15; 17) and the cab frame (1).

## Revendications

1. Cabine de véhicule pour un véhicule utilitaire, en particulier pour un véhicule utilitaire agricole comme un tracteur, un espace intérieur de cabine étant limité entre autres par un pare-brise (3) et par un toit de cabine qui comprend une partie de toit transparente (4 ; 15 ; 17), **caractérisée en ce que** la partie de toit transparente (4 ; 15 ; 17) et le pare-brise (3) sont directement adjacents l'un à l'autre, le pare-brise (3) et la partie de toit transparente (4 ; 15 ; 17) étant reliés l'un à l'autre par l'intermédiaire d'un joint intercalé (9 ; 16 ; 20).

2. Cabine de véhicule selon la revendication 1, **caractérisée en ce que** le joint (9 ; 16 ; 20) est de conception transparente.

3. Cabine de véhicule selon la revendication 1, **caractérisée en ce que** le pare-brise (3) et la partie de toit transparente (4 ; 15) sont fixés l'un à l'autre le long d'une gorge (7 ; 14) qui est ménagée dans une zone extrême de la partie de toit transparente (4 ; 15) en étant orientée vers le pare-brise (3) et dans laquelle le pare-brise (3) est introduit par une surface de bout (8).

4. Cabine de véhicule selon la revendication 3, **caractérisée en ce qu'**une profondeur de gorge (tₙ) est supérieure à la moitié de l'épaisseur (d) de la partie de toit transparente (4).

5. Cabine de véhicule selon la revendication 1, **caractérisée en ce qu'**en outre le pare-brise (3) et la partie de toit transparente (4 ; 15 ; 17) sont chacun collés à la structure de cabine (1).

6. Cabine de véhicule selon la revendication 5, **caractérisée en ce que**, du côté de la structure de cabine (1), le pare-brise (3) et/ou la partie de toit (4 ; 15 ; 17) reposent sur des éléments d'écartement (12).

7. Procédé de fabrication d'une cabine de véhicule pour un véhicule utilitaire, un pare-brise (3) et une partie de toit transparente (4 ; 15 ; 17) étant fixés à une structure de cabine (1) en étant directement adjacents l'un à l'autre.

8. Procédé selon la revendication 7, **caractérisé en ce que** 5 le pare-brise (3) est d'abord collé à la structure de cabine (1) par le fait que le pare-brise (3) est d'abord orienté par une surface de bout (8) vers la structure de cabine (1) et est ensuite plaqué contre la structure de cabine (1), la partie de toit transparente (4 ; 15 ; 17) étant ensuite d'abord posée du côté du pare-brise (3) et ensuite plaquée contre la structure de cabine (1) et collée avec celle-ci.

9. Procédé selon la revendication 8, **caractérisé en ce que**, avant la fixation du pare-brise (3) du côté de la structure de cabine (1), plusieurs éléments d'écartement (12) sont fixés, lesquels définissent chacun une épaisseur minimale d'une couche d'adhésif entre le pare-brise (3) et la structure de cabine (1) et/ou entre la partie de toit transparente (4 ; 15 ; 17) et la structure de cabine (1).
